# EUROPÄISCHE PATENTSCHRIFT

(11) **EP 2 468 155 B1**
(45) Veröffentlichungstag und Bekanntmachung des Hinweises auf die Patenterteilung: **03.04.2013**
(21) Anmeldenummer: 11008973.7
(22) Anmeldetag: 11.11.2011
(51) Int. Cl.: A47J 31/54, A47J 31/56

(54) **Verfahren zur Regelung der Heißwasserzubereitung**
Method for regulating hot water preparation
Procédé de réglage de la préparation d'eau chaude

(30) Priorität: 22.12.2010 DE 102010055849
(43) Veröffentlichungstag der Anmeldung: 27.06.2012
(73) Patentinhaber: Severin Elektrogeräte GmbH, 59846 Sundern (DE)
(72) Erfinder: Hilckmann, Marius, 58453 Witten (DE); Kroesen, Klaus, 46509 Xanten (DE)
(74) Vertreter: Köchling, Conrad-Joachim

(56) Entgegenhaltungen:
- DE-A1-102004 004 817
- US-A1- 2008 008 461

## Beschreibung

Die Erfindung betrifft ein Verfahren zur Regelung der Heißwasserzubereitung bei elektrischen Getränkezubereitungsmaschinen, insbesondere Kaffeemaschinen, mit einem Wassertank oder Wasserzulauf für Frischwasser, vorzugsweise einer Pumpe zur Förderung des Frischwassers zu einem Durchlauferhitzer ohne Thermoblock, einer Brühkammer mit Auslauf zur Abgabe des vom Durchlauferhitzer erhitzten Wassers beziehungsweise des damit erzeugten Getränkes, mindestens einem ersten Temperaturfühler am Durchlauferhitzer, vorzugsweise einem zweiten Temperaturfühler zur Erfassung der Frischwassertemperatur zum Beispiel am Wassertank, vorzugsweise einem Durchflusssensor zur Erfassung des Durchflusses durch das System, sowie einer elektronischen Steuer- und Regeleinrichtung zur Ansteuerung zum Beispiel der Pumpe und des Heizkörpers.

Der Einsatz von Durchlauferhitzern ohne Thermoblock in Kaffeemaschinen, insbesondere Espresso- oder Kaffeepad- Maschinen, führt zu einem komplexeren Systemverhalten, als es beim Einsatz anderer Mittel, wie zum Beispiel Boiler, der Fall ist. Dies kann Ursache für zu geringe Temperaturen des erzeugten Getränkes, stark schwankende Temperaturen des Wassers in der Brüheinheit sowie übermäßige Dampfbildung oder für zu hohe Drücke sein. Darüber hinaus steigt der Einfluss sowohl exogener (Wassertemperatur im Tank, Umgebungstemperatur und dergleichen) wie auch endogener (Toleranzen, Verkalkung usw.) Parameter.

Bekannte Steuerungen erfassen an einer oder mehreren Stellen im Bereich des Heizkörpers oder im Bereich des von der Pumpe geförderten Wassers eine beziehungsweise mehrere Temperaturen und beeinflussen in Abhängigkeit von den ermittelten Werten direkt die Pumpen- oder Heizleistung. Hierzu ist beispielsweise auf die DE 10 2004 004 817 A1 zu verweisen.

Ausgehend von diesem Stand der Technik liegt der Erfindung die Aufgabe zugrunde, ein Verfahren gattungsgemäßer Art zu schaffen, welches möglichst einfach und mit einfachen Mitteln eine genaue Regelung der Heißwasserzubereitung ermöglicht.

Zur Lösung dieser Aufgabe wird vorgeschlagen, dass die elektronische Steuer- und Regeleinrichtung einen elektronischen Speicher umfasst, in welchem ein Datensatz als Vergleichsmodelldatensatz gespeichert ist, der analytisch oder experimentell erstellt wird und die für die Heißwasserzubereitung notwendigen oder gewünschten Daten umfasst, dass ferner die beim Betrieb der Getränkezubereitungsmaschine direkt messbaren Soll- Größen von Wassertemperatur, Heizungstemperatur, und Durchfluss sowie indirekt bestimmbare Größen wie Druck im Wasserführsystem und Verkalkungsgrad des Durchlauferhitzers elektronisch erfasst und mit den Daten des Vergleichsmodelldatensatzes verglichen werden, wobei aus der Gesamtheit der Daten durch die Regelelektronik beziehungsweise die enthaltene Software die Heizleistung und gegebenenfalls auch die Pumpenleistung anhand des Modells so bestimmt werden, dass sich in Bezug auf ein bestimmtes Kriterium, zum Beispiel Temperatur-, Druckverlauf, Vermeidung von Überdruck, optimale Werte ergeben, und wobei vorzugsweise hieraus Korrektur- Sollwerte abgeleitet werden, auf die die Pumpenleistung und die Heizleistung eingeregelt wird.

Bevorzugt ist vorgesehen, dass während des Heißwasserzubereitungsvorganges kontinuierlich die gemäß Vergleichsmodelldatensatz erwarteten Messgrößen mit den tatsächlich gemessenen Messwerten verglichen werden und die Sollwertfolgen für die Regelung von Heizleistung und Pumpenleistung entsprechend korrigiert werden.

Auch ist bevorzugt, dass der Durchfluss in einem internen Regelkreis, bestehend aus Durchflusssensor und Pumpe annähernd konstant oder auf einem Sollwert oder einer Sollwertfolge gehalten wird.

Zudem ist bevorzugt, dass bei einer zu großen Abweichung zwischen Soll- Werten und Ist- Werten eine Fehlermeldung erfolgt und/oder die Maschine abgeschaltet wird.

Insbesondere ist auch bevorzugt, dass die Korrekturdaten und/oder die Abweichungen der Istvon den Soll- Werten mittels eines Algorithmus dazu genutzt werden, die Parameter des Vergleichsmodelldatensatzes anzupassen.

Die Erfindung wird nachstehend anhand der beigefügten Zeichnungen und unter Bezugnahme auf die beigefügten Ablaufdiagramme erläutert.

Es zeigt:
- Figur 1: eine Ausbildung einer Getränkezubereitungsmaschine zur Durchführung des erfindungsgemäßen Verfahrens;
- Figur 1a: eine Variante hierzu;
- Figur 2: eine weitere Variante;

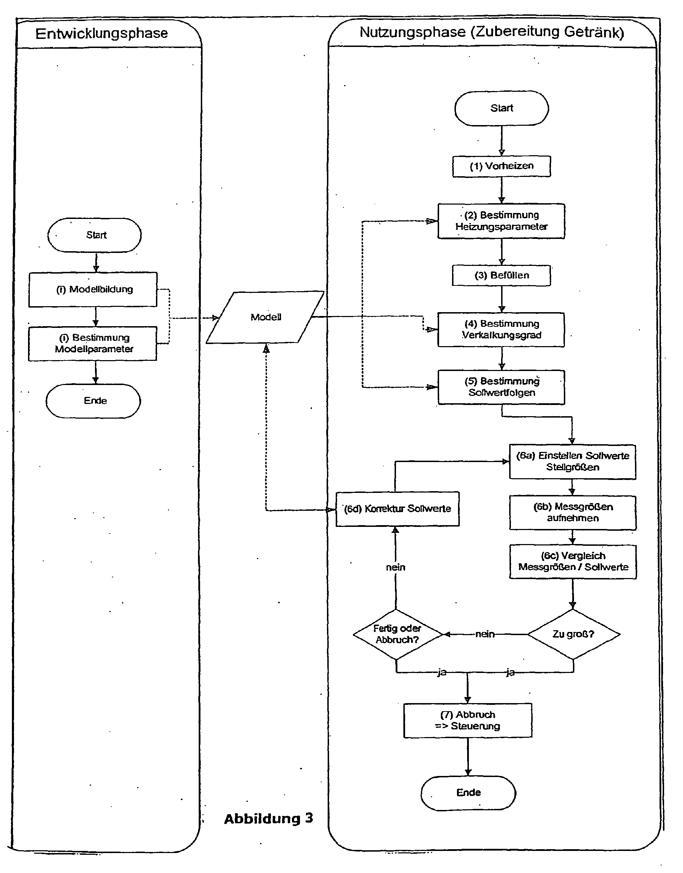

- Figur 3: ein Ablaufdiagramm zur Verfahrensbeschreibung;
- Figur 4: ein Diagramm zur Bestimmung eines Korrekturkoeffizienten kH
- Figur 5: eine modellbasierte Bestimmung der Heizungsparameter;

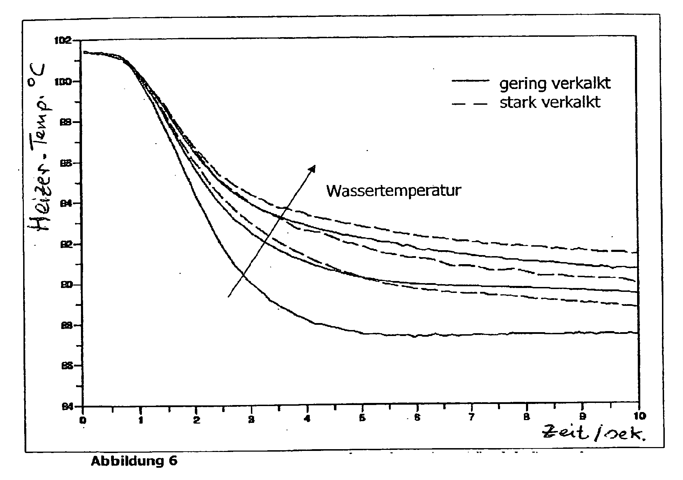

- Figur 6: den Temperaturverlauf an der Heizung in Abhängigkeit von der Wassertemperatur und dem Verkalkungsgrad;
- Figur 7: ein Blockdiagramm zur Regelung.

Das erfindungsgemäße Verfahren ermöglicht durch Berücksichtigung von Werteverläufen sowohl zurückschauend als auch vorausgreifend nicht nur eine schnelle und exakte Regelung, sondern auch die Beeinflussung des zeitlich- dynamischen Verhaltens, welches gerade die Komplexität des Systems unter Verwendung eines Durchlauferhitzers ausmacht.

In Kombination mit einem analytisch oder experimentell erstellten theoretischen Modell lassen sich aus den entsprechenden Messkurven neben den direkt messbaren Größen wie Wassertemperatur, Heizungstemperatur und Durchfluss weitere Messgrößen wie Druck und Verkalkungsgrad indirekt bestimmen. Dadurch ist der Einfluss verschiedener Störparameter wie Verkalkungsgrad, Bauteiltoleranzen und Spannungsschwankungen reduzierbar. Da die letztgenannten Parameter vor der eigentlichen Zubereitung des Getränkes bestimmbar sind, können die für einen vorgegebenen Zielgrößenverlauf benötigten Sollwertfolgen für die Stellgrößen und die erwarteten Messgrößen ebenfalls im Voraus berechnet werden. Es ist eine drastische Verbesserung des Einschwingverhaltens, das in den Grenzen des Systems nahezu beliebig vorgebbar wird, möglich.

Während des Zubereitungsvorganges werden dann ständig die erwarteten mit den gemessenen Werten verglichen und die Sollwertfolgen entsprechend korrigiert. Um die Komplexität der Berechnungen einzuschränken, kann der Durchfluss in einen inneren Regelkreis bestehend aus Durchflusssensor und Pumpe annähernd konstant und/oder auf einem Soll Wert oder einer Sollwertfolge gehalten werden. Fallen bei dem Vergleich zwischen SollWerten und Ist- Werten zu große Abweichungen auf, sind Rückschlüsse auf Verstopfungen oder Verkalkung möglich und es können entsprechende Fehlermeldungen ausgegeben werden, beispielsweise über eine Diagnoseanzeige oder auch in der Form, dass die entsprechend betriebene Maschine abgeschaltet wird.

Ein weiterer Algorithmus kann die Korrekturdaten beziehungsweise die Abweichungen der Ist- von den Soll- Werten nutzen, um Modellparameter anzupassen. Das System wird damit lernfähig und optimiert sich selbst.

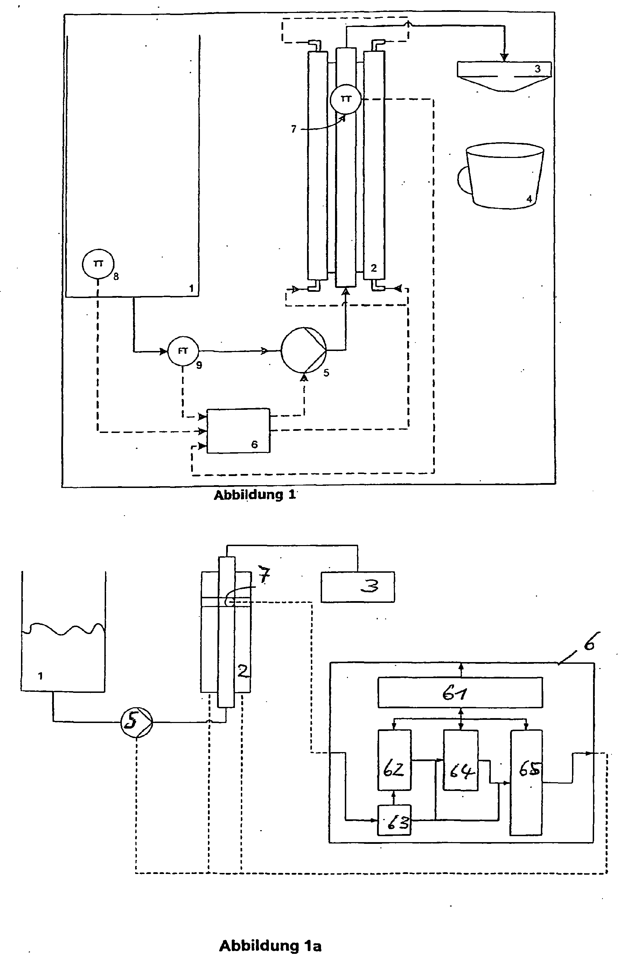

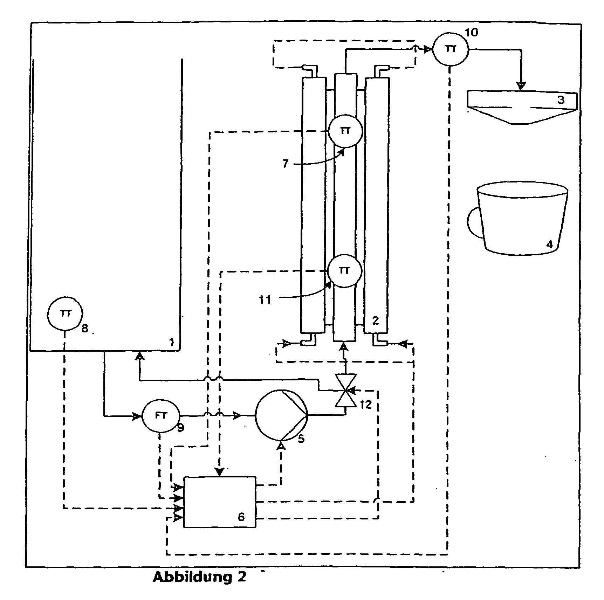

Eine grundsätzliche Systemdarstellung ist in den Figuren 1, 1a und 2 beigefügt. In der Zeichnung sind nur die wesentlichen Komponenten gezeigt. Eine Getränkezubereitungsmaschine, beispielsweise ein Kaffeeautomat, weist einen Wassertank 1 auf, von dem eine Ablaufleitung abgeht, in die eine Pumpe 5 eingeschaltet ist, mittels derer das im Wassertank 1 befindliche Wasser durch einen Durchlauferhitzer 2 in eine Brühkammer 3 transportiert wird, welche einen Ablauf aufweist, durch den das erzeugte Getränk in einen Behälter, beispielsweise eine Tasse 4 abgegeben werden kann. Am Heizkörper 2 ist ein Temperaturfühler 7 angebracht, der die Temperatur des Heizkörpers 2 misst. Ein weiterer Temperaturfühler 8, der die Wassertemperatur im Wassertank 1 misst, befindet sich im Wassertank 1 oder in einem Bereich zwischen Wassertank 1 und Pumpe 5 oder im Bereich zwischen Pumpe 5 und Heizkörper 2.

Die Temperaturfühler 7,8 sowie ein zusätzlicher Durchflusssensor 9, der sich beispielsweise in einem Bereich zwischen dem Wassertank 1 und der Pumpe 5 befindet, sind mit einer elektronischen Steuer- und Regeleinrichtung 6 verbunden, welche die Pumpe 5 und den Heizkörper 2 ansteuert. Eine einfachste Art dieser Ausgestaltung ist in Abbildung 1 gezeigt. Gemäß Abbildung 2 ist im Bereich zwischen dem Wassertank 1 und der Brühkammer 3 ein Überdruckventil 12 vorgesehen. Dieses kann rein mechanisch ausgelöst werden und/oder durch ein elektrisches Signal steuerbar sein.

Da die Temperatur an der Brühkammer 3 als Zielgröße aufgefasst werden kann, kann zusätzlich im Bereich zwischen Heizung 2 und Brühkammer 3 ein weiterer Temperaturfühler 10 vorgesehen sein. Um die im Folgenden beschriebenen Abläufe und damit verbundene Berechnungen zu vereinfachen, können weitere Temperatursensoren 11 an der Heizung 2 sinnvoll sein. Ebenfalls kann auch aus Kostengründen der Durchflusssensor 9 und eventuell der Temperaturfühler 8 entfallen, wenn sich Durchfluss und Wassertemperatur mit ausreichender Genauigkeit berechnen oder vorhersagen lassen, beispielsweise durch Erfahrungswerte oder Messwerte.

Bei der Ausführungsform gemäß Abbildung 1a ist gezeigt, dass die Steuerelektronik 6 eine Ablaufsteuerung 61 und eine Regelung beinhaltet. Letztere berücksichtigt neben der im Bereich des Heizkörpers 2 gemessenen Temperatur auch den zeitlichen Verlauf der gemessenen Größen. Im Zusammenhang mit einem durch Simulation oder durch Versuch ermittelten Modell des Systems oder eines Teils des Systems lassen sich aus aktuellen Daten 62 und historischen gespeicherten Daten 63 (Momentanwerten und Verlaufsgrößen) mittels Softwarealgorithmen 64 als Bestandteil der Regelelektronik weitere Größen ermitteln beziehungsweise Rückschlüsse auf andere Parameter ziehen. Aus der Gesamtheit dieser Größen werden durch die Regelelektronik beziehungsweise die Software die Heizleistung und die Pumpenleistung anhand des genannten oder eines weiteren Modells oder Teilmodells so bestimmt, dass sich in Bezug auf ein bestimmtes Kriterium optimale Werte 65 ergeben (zum Beispiel Temperatur- und Druckverlauf, Vermeidung von Überdruck).

Um die Bestimmung verschiedener Parameter möglichst einfach zu gestalten, können Heizleistung und Pumpenleistung insbesondere während einer Aufheizphase durch die Ablaufsteuerung 61 so gesteuert oder geregelt werden, dass sich besonders einfach auszuwertende Kurvenverläufe der gemessenen oder der zu bestimmenden Größen ergeben.

Damit ist insbesondere eine Bestimmung der Wassertemperatur des im Tank 1 befindlichen Wassers und darüber hinaus auch eine Aussage über den Grad der Verkalkung des Durchlauferhitzers 2 möglich. Durch die Ergänzung um weitere Sensoren ist durch entsprechende Modellbildung auch eine Bestimmung des Durchflusses beispielsweise mittels zweier Temperaturfühler 7,11 im Bereich der Heizung oder des Druckes beispielsweise mittels eines Durchflusssensors 9 unter Berücksichtigung der Pumpenkennlinie der Pumpe 5 möglich. Die der Heizung 2 und der Pumpe 5 zugeführte elektrische Leistung kann ebenfalls als Sensor aufgefasst werden und dem Modell als Eingangsgröße dienen und zusammen mit den Werten zweier Temperaturfühler im Wasser im Bereich der Heizung 2 und im Bereich zwischen Heizung 2 und Brüheinheit 3 zur Bestimmung der Verkalkung oder des Durchflusses herangezogen werden.

Ein Modell kann darüber hinaus zur Systemdiagnose verwendet werden. Ein Vergleich der gemessenen Daten mit den aus einem Modell errechneten Werten lässt Rückschlüsse auf Fehler zu, die entweder in die Ermittlung der Stellgrößen eingehen oder zur Ausgabe eines Hinweises an den Nutzer verwendet werden können. Hilfreich kann zu diesem Zweck der Einsatz der Stellgrößen als Eingangsgröße für ein Diagnosemodell sein.

Beim Betrieb der Einrichtung enthält der zeitliche Verlauf wesentliche Informationen über das Gesamtsystemverhalten sowie einzelne Parameter, die aus Momentanwerten nicht zu bestimmen sind. Darüber hinaus kann eine Prognose über zukünftige Werte der Größen erstellt werden, die eine exaktere und vor allem schnellere Regelung ermöglicht.

Durch die Nutzung eines Modells und mit dessen Hilfe bestimmter Größen wird die Anzahl der zur Bestimmung der Stellgrößen verwendbaren Eingangsgrößen erhöht, ohne Einsatz weiterer Bauteile. Dies führt zum einen zu einer Kostenersparnis, zum anderen zur Kenntnis anderweitig nicht oder nur schwierig bestimmbarer Größen, wie zum Beispiel einer Aussage zum Grad der Verkalkung.

Die Auflösung und Genauigkeit der Messung sowie die Übereinstimmung des Modells mit dem realen System sind eingeschränkt und unter Umständen abhängig vom jeweiligen Arbeitspunkt. Die Ermittlung von Messgrößen in bestimmten Betriebsbereichen kann demnach zu einer vereinfachten Bestimmung oder zu einer Erhöhung der Genauigkeit führen (Erhöhung der Robustheit des eingesetzten Verfahrens/Algorithmus in Bezug auf das System).

Die genannten Parameter beeinflussen die Abhängigkeit einer am Heizkörper 2 gemessenen Temperatur von der tatsächlichen Temperatur des Wassers beispielsweise in der Brüheinheit 3 wesentlich. Durch die gewonnene Kenntnis dieser Parameter kann die Beeinflussung ausgeglichen werden und eine ausreichend genaue Regelung der Wasserzubereitung mittels nur eines außen am Heizkörper 2 angebrachten Temperaturfühlers 7 ist möglich.

Der Einsatz weiterer Sensoren, insbesondere auch solcher für andere physikalische Messgrößen außer der Temperatur, kann die Genauigkeit erhöhen und Grundlage für den Einsatz eines komplexeren Modells sein, aber auch den Einsatz eines einfachen Modells und/oder einfacherer Algorithmen und damit auch kleinerer beziehungsweise weniger leistungsfähigerer Modelle ermöglichen.

Je nach Komplexität des Modells ist eine Aussage im laufenden Betrieb möglich. Es müssen dann keine gesonderten Abläufe durchfahren werden. Es sind Fehlereingrenzungen möglich, die durch entsprechende Reaktion oder Mitteilung an den Nutzer den Bedienkomfort erheblich verbessern können.

Bei der nachfolgenden Verfahrensbeschreibung werden folgende Begriffe und Symbole verwendet:
- Wertfolge: Folge von Werten, die aufeinander folgenden Zeitpunkten zugeordnet sind (es handelt sich also um eine Zeitreihe als Diskretisierung des kontinuierlichen Verlaufs über der Zeit)
- *P_{H} :* Heizleistung, Stellgröße; *P_{H,e1} :* Heizleistung (tatsächliche elektrische Leistung); die elektrische Heizleistung kann durch Spannungsschwankungen und Toleranzen von der Stellgröße abweichen
- *Pₚ:* Pumpenleistung, Stellgröße;
- *v̇* (Volumen-) Durchfluss, Wassermenge je Zeiteinheit
- *T_{H} :* Temperatur Heizkörper, gemessen am Sensor
- *T*_{*w,*i}*:* Temperatur Zulauf / Wassertank, gemessen am Sensor
- T_{w},ₒ: Temperatur Auslauf, gemessen am Sensor
- *Q*: Wärme; W : Arbeit
- *Cq :* Wärmekapazität
- *kₕ*: Koeffizient, der eine Beziehung zwischen Stellgröße Heizleistung und elektrischer Heizleistung herstellt.

Für Zeitreihen / Wertefolgen wird zusätzlich die Klammernotation (t) bzw. für einen bestimmten Wert zum Zeitpunkt t0 (t=t0) und für einen Zeitraum (t=t0..t1) verwendet, für Sollwerte wird der Index u ergänzt, beispielsweise *P*_{*H*,*u*}(t) für die Sollwertfolge der Stellgröße der Heizleistung.

Im Folgenden werden die einzelnen Schritte des von der elektronischen Steuer- und Regeleinrichtung bestimmten Ablaufs beschrieben. Die Abbildung zeigt ein vereinfachtes Ablaufdiagramm, das zur Verdeutlichung eine unabhängige Entwicklungsphase beinhaltet, in der ein Modell erstellt und Modellparameter ermittelt werden.

### Step 1: Vorheizen

Zunächst wird mit einem Stellgrößenverlauf *P_{H}* (t) der Heizkörper erwärmt. Der Stellgrößenverlauf ist temperaturabhängig. Das Vorheizen endet, sobald eine definierte Temperatur *T_{H} = Tₛₜₐᵣₜ ,* z. B. 95°C, erreicht ist. Der Heizkörper ist in dieser Phase nicht durchströmt und idealerweise leer.

### Step 2: Bestimmung Heizungsparameter

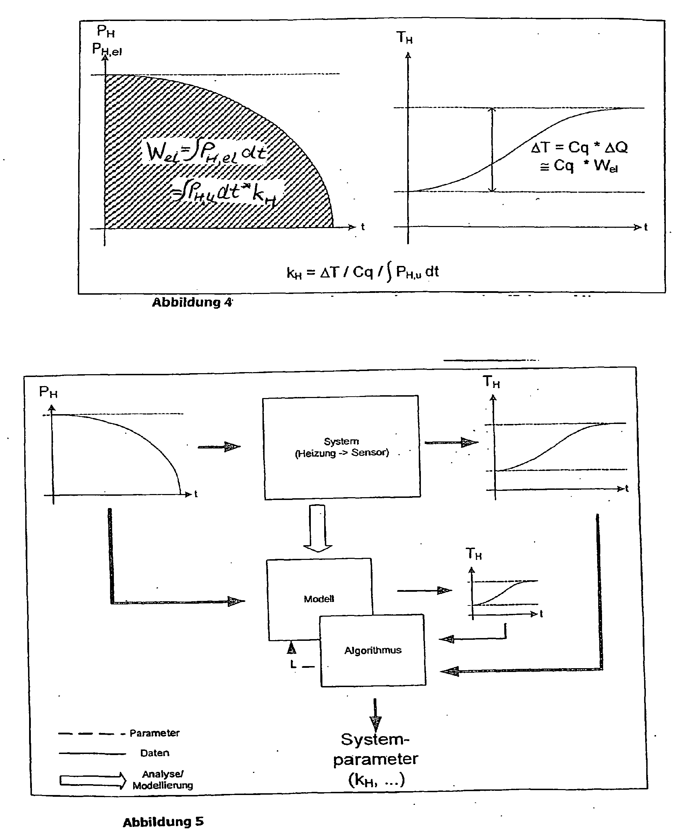

Wird eine annähernd homogene Wärmeverteilung angenommen und werden Leistungen und Zeiten für das Aufheizen so gewählt, dass Ausgleichsvorgänge annähernd abgeschlossen sind, kann unter Kenntnis der Wärmeeigenschaften des Systems zunächst die eingebrachte Wärmemenge sowie die entsprechend eingebrachte elektrische Energie durch die Temperaturerhöhung und daraus ein Koeffizient *kₕ* errechnet werden, der eine Beziehung zwischen der Stellgröße und der tatsächlichen elektrisch eingebrachten Energie herstellt und somit die Berücksichtigung von Spannungsschwankungen und Heizungstoleranzen ermöglicht. Siehe Abbildung 4, die die einfache Bestimmung des Korrekturkoeffizienten kH beschreibt.

Eine andere Möglichkeit nutzt die sich ergebende Kurvenform und das Vorhandensein eines theoretischen Modells des Systems, wie es bei der Bestimmung weiterer Parameter ohnehin benötigt wird. Das hier verwendete Teilmodell besteht im einfachsten Fall aus einem einfachen Verzögerungsglied.

Die Abbildung 1 erläutert die modellbasierte Bestimmung der Heizungsparameter.

Der Koeffizient *kₕ* und gegebenenfalls auch weitere Parameter der Heizung bzw. der Strecke bestehend aus Heizung und Sensor einschließlich dessen Anbindung, können dann aus dem Temperaturverlauf T_{H}(t) in Abhängigkeit von der Stellgröße P_{H}(t) bestimmt werden, je nach Komplexität mittels der Modellgleichungen oder mit Hilfe einer iterativen Annäherung. Ein Algorithmus bestimmt die Modellparameter so, dass der Fehler (beispielsweise die quadratische Abweichung) zwischen den Messwerten T_{H}(t) und den mittels des Modells berechneten Sollwerten T_{H,u}(t) möglichst klein wird. Diese Alternaive ist eine Verallgemeinerung des oben zuerst genannten Falls und ermöglicht eine schnelle und flexible Bestimmung der Parameter, jedoch nur unter stark erhöhten Anforderungen an Messgenauigkeit und Systemkenntnis.

### Step 3+4: Bestimmung Verkalkungsgrad / Wassertemperatur

Unmittelbar nach Beenden des Aufheizvorganges wird die Heizung abgeschaltet und die Pumpe solange eingeschaltet, bis das System mit Wasser gefüllt ist. Da das Wasser eine Kühlung bewirkt, ist der Temperaturverlauf am Heizkörper selbst nun abhängig zum einen von der Temperatur des zugeführten Wassers und zum anderen vom Grad der Verkalkung, da diese den Wärmeübergang zwischen dem Metall des Heizkörpers und Wasser beeinflusst; die Temperatur nähert sich asymptotisch einem Endwert. Der Endwert ist ein Maß für die Temperatur des zugeführten Wassers, während die Zeit zum Erreichen eines bestimmten Wertes in der Nähe dieses Endwertes ein Maß für den Wärmeübergang und damit für den Grad der Verkalkung ist. Da in der hier zunächst beschriebenen Ausführung die Temperatur des zugeführten Wassers T_{w,i} bekannt ist, kann beispielsweise über die Temperatur T_{H}(t=t1) zu einem definierten Zeitpunkt t1 ein Verkalkungsgrad bestimmt werden. Entsprechende Tabellen, die eine Zuordnung von T_{H}(t=t1) mit einem Parameter T_{w,i} zu einem Verkalkungsgrad ermöglichen, können der Einfachheit halber als Tabelle hinterlegt sein.

Die Abbildung 2 zeigt den Temperaturverlauf an der Heizung in Abhängigkeit von der Wassertemperatur und dem Verkalkungsgrad.

Das oben erwähnte Abschalten der Heizung sowie der beschriebene bzw. in der Abbildung dargestellte Verlauf der Größen vereinfachen die Berechnungen bzw. verringern die Anforderungen an das Modell und die Genauigkeiten, sind jedoch nicht zwingend notwendig. Insbesondere mit der gewonnen Kenntnis des Parameters k_{H} und möglicher weiterer Heizungsparameter können auch die sich aus einer weiteren Beheizung oder einem Durchströmen des Heizkörpers ergebenden dynamischen Einflüsse bei hinreichend detailliertem Modell berücksichtigt werden (Bestimmung Verkalkungsgrad analog zu Step 2, Bestimmung der Heizleistung). In diesem Fall ist neben dem Verkalkungsgrad auch die Temperatur des Wassers T_{w,i} bestimmbar, dann ist der Einsatz des Temperatursensors (8) nicht erforderlich.

Wird dagegen ein weiterer Temperatursensor(10) im Bereich zwischen Heizung und Auslauf verwendet, so kann der Verkalkungsgrad ebenso aus der Temperaturdifferenz des Wassers vor und nach Durchlaufen der Heizung, der zugeführten Energie und der Wassermenge (Durchfluss) berechnet werden.

Andererseits ist dann, bei bekanntem Verkalkungsgrad, der Durchfluss über die Größen Temperaturdifferenz des Wassers vor und nach Durchlaufen der Heizung und zugeführte Energie berechenbar. Je nach Modell und Messgenauigkeit können dazu auch die Werte zweier Temperatursensoren (7) und (11) am Heizkörper mit definiertem Abstand verwendet werden. In diesem Fall ist der Durchflusssensor nicht erforderlich.

### Step 5: Bestimmung Sollwert (-folgen) Eingangsgrößen und Stellgrößen

Mit der gewonnenen Kenntnis des Verkalkungsgrades und des Koeffizienten k_{H} sowie unter Berücksichtigung der Temperatur des zugeführten Wassers T_{w,i} lassen sich (optimale) Sollwertfolgen für die Stellgrößen P_{P,u}(t) und P_{H,u}(t) bestimmen, die bei vorliegendem Modell zu vorgegebenen Druck-/Durchfluss- und Wasserauslauftemperatur-Verläufen führen. Mit Hilfe des Modells werden ebenfalls (erwartete) Sollwertfolgen T_{H,u}(t) und pᵤ(t) / vᵤ(t) errechnet.

### Step 6a: Einstellen/Ausgabe der Stellgrößen

Zu jedem Zeitpunkt t werden die in Step 5 bzw. Step 6d ermittelten Werte der Wertefolgen als Stellgröße ausgegeben. Die Leistungssteuerung erfolgt idealerweise mittels Pulspaket- oder Phasenanschnittsteuerung oder einer Kombination aus beiden.

### Step 6b: Ermitteln der tatsächlichen Eingangsgrößen

Zu jedem Zeitpunkt t werden die Eingangs- bzw. Messgrößen der Temperatursensoren und des Durchflusssensors gemessen. Aus dem Durchfluss und der Stellgröße für die Pumpenleistung wird anhand der Durchfluss-/Druckkennlinien der Druck im System bestimmt.

### Step 6c: Vergleich Ist-/Sollwerte

Die gemessenen Größen werden mit den Sollwerten verglichen. Dabei kann insbesondere auf gespeicherte Daten zu früheren Zeitpunkten zurückgegriffen werden.

### Step 6d: Korrektur der Sollwertfolge

Ein Regler korrigiert unter Berücksichtigung der Ergebnisse aus Step 6c die Sollwertfolge der Stellgrößen. Dabei können insbesondere Sollwerte für spätere Zeitpunkte beeinflusst werden, wodurch ein präziser Einfluss auf die zeitliche Dynamik möglich ist.

### Diagnose

Weichen Soll- und Istwerte zu stark voneinander ab, deutet dies auf Fehler hin. Als Beispiele seien insbesondere genannt:
- Ein erhöhter Druck kann auf Verstopfungen zurückgeführt werden
- zu geringe Temperaturen / zu hohe Stellgrößen für die Heizung deuten auf einen Heizungsdefekt oder einen Sensordefekt hin (Verkalkung siehe oben)
In solchen Fällen kann der Vorgang abgebrochen, bestimmte Sicherheitsfunktionen eingeleitet und der Nutzer informiert werden.

### Step 7: Ende/Abbruch, Parameter-Speicherung

Ermittelte Werte für Verkalkungsgrad und Heizungsleistung können in einem Speicher abgelegt werden, damit Sie später wieder zur Verfügung stehen, beispielsweise um den Verkalkungsprozess beurteilen zu können oder falls Fehler bei der erneuten Bestimmung der Werte auftreten. Weiterhin können die Korrekturdaten der Sollwertfolgen der Stellgrößen abgelegt und beim nächsten Kochvorgang direkt berücksichtigt werden. Idealerweise werden die Korrekturdaten von einem Algorithmus genutzt, um Modellparameter anzupassen, Insbesondere bei Einsatz eines Temperatursensors im Bereich zwischen Heizung und Auslauf (Zielgröße) wird das System damit lernfähig.
In einer einfachen Ausprägung kann beispielsweise immer eine mittlere Abweichung als Korrekturwert verwendet werden.

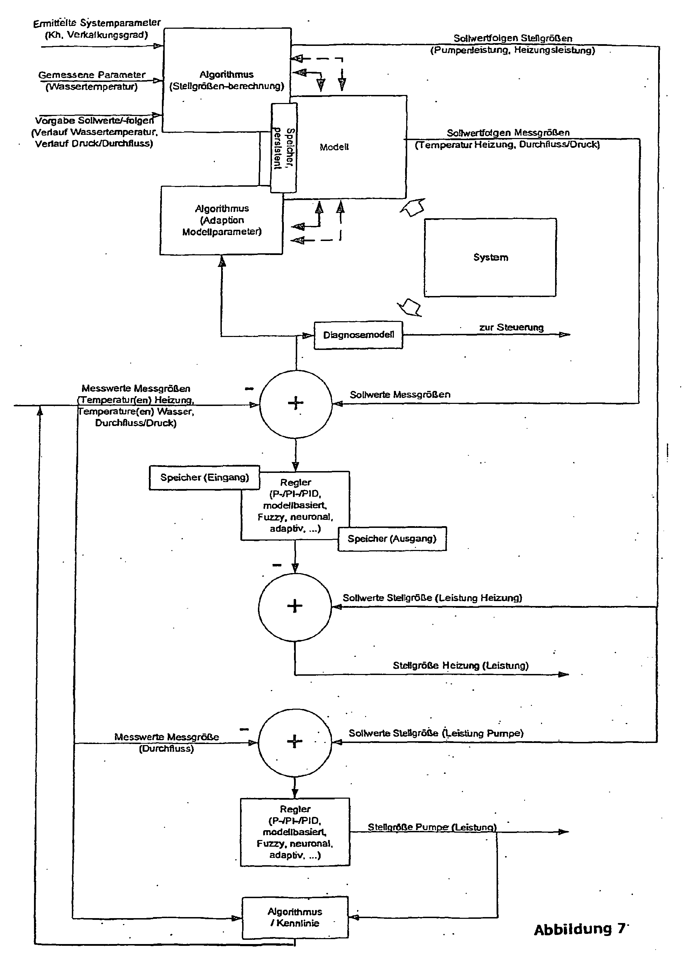

Ergänzende Hinweise zu Diagramm Abbildung 7 Blockdiagramm zur Regelung.
Das Blockdiagramm 7 ist gültig für Step 6 des Ablaufdiagramms, beschreibt also die eigentliche Regelung beziehungsweise den Vorgang des Zubereitens eines Getränkes. Es sind nur Speicherblöcke mit besonderer Bedeutung dargestellt. Der persistente Speicher dient der kontinuierlichen Adaption der Modellparameter, die beiden Speicherblöcke der Regelung sollen die Möglichkeit verdeutlichen, auf gespeicherte Eingangsdaten zurückgreifen sowie Stellgrößenverläufe (im Gegensatz zu Momentanund Einzelwerten) beeinflussen zu können.

Prinzipiell ist ein Durchflusssensor nicht unbedingt notwendig, wenn von ausreichender Systemkenntnis und -stabilität ausgegangen werden kann. Der Durchfluss- Druckverlauf kann dann empirisch ermittelt beziehungsweise die entsprechende Sollwertfolge der Pumpenleistung bestimmt werden. Die Pumpe wird dann nach dieser Sollwertfolge gesteuert. Dies gilt analog auch für andere Größen.

Für die Modelle und Algorithmen sind neben klassischen (nicht-) linearen Systemen insbesondere Expertensysteme/Fuzzy- Systeme und neuronale Netze sowie adaptive und/oder generische Algorithmen einsetzbar. Das beziehungsweise die beschriebenen Verfahren sind auch zur Dampfbereitung einsetzbar.

### Die Erfindung ist nicht auf die

Ausführungsbeispiele beschränkt, sondern im Rahmen der Offenbarung vielfach variabel.

## Patentansprüche

1. Verfahren zur Regelung der Heißwasserzubereitung bei elektrischen Getränkezubereitungsmaschinen, insbesondere Kaffeemaschinen, mit einem Wassertank (1) oder Wasserzulauf für Frischwasser, vorzugsweise einer Pumpe (5) zur Förderung des Frischwassers zu einem Durchlauferhitzer (2) ohne Thermoblock, einer Brühkammer (3) mit Auslauf zur Abgabe des vom Durchlauferhitzer (2) erhitzten Wassers beziehungsweise des damit erzeugten Getränkes, mindestens einem ersten Temperaturfühler (7) am Durchlauferhitzer (2), vorzugsweise einem zweiten Temperaturfühler (8) zur Erfassung der Frischwassertemperatur zum Beispiel am Wassertank (1), vorzugsweise einem Durchflusssensor (9) zur Erfassung des Durchflusses durch das System, sowie einer elektronischen Steuer- und Regeleinrichtung (6) zur Ansteuerung zum Beispiel der Pumpe (5) und des Heizkörpers (2), **dadurch gekennzeichnet, dass** die elektronische Steuer- und Regeleinrichtung (6) einen elektronischen Speicher (63) umfasst, in welchem ein Datensatz als Vergleichsmodelldatensatz gespeichert ist, der analytisch oder experimentell erstellt wird und die für die Heißwasserzubereitung notwendigen oder gewünschten Daten umfasst, dass ferner die beim Betrieb der Getränkezubereitungsmaschine direkt messbaren Soll- Größen (52) von Wassertemperatur, Heizungstemperatur, und Durchfluss sowie indirekt bestimmbare Größen wie Druck im Wasserführsystem und Verkalkungsgrad des Durchlauferhitzers (2) elektronisch erfasst und mit den Daten (63) des Vergleichsmodelldatensatzes verglichen werden, wobei aus der Gesamtheit der Daten durch die Regelelektronik (6) beziehungsweise die enthaltene Software die Heizleistung und gegebenenfalls auch die Pumpenleistung anhand des Modells (63) so bestimmt werden, dass sich in Bezug auf ein bestimmtes Kriterium, zum Beispiel Temperatur-, Druckverlauf, Vermeidung von Überdruck, optimale Werte ergeben, und wobei vorzugsweise hieraus Korrektur-Sollwerte abgeleitet werden, auf die die Pumpenleistung und die Heizleistung eingeregelt wird.

2. Verfahren nach Anspruch 1, **dadurch gekennzeichnet, dass** während des Heißwasserzubereitungsvorganges kontinuierlich die gemäß Vergleichsmodelldatensatz erwarteten Messgrößen mit den tatsächlich gemessenen Messwerten verglichen werden und die Sollwertfolgen für die Regelung von Heizleistung und Pumpenleistung entsprechend korrigiert werden.

3. Verfahren nach einem der Ansprüche 1 oder 2, **dadurch gekennzeichnet, dass** der Durchfluss in einem internen Regelkreis, bestehend aus Durchflusssensor (9) und Pumpe (5) annähernd konstant oder auf einem Sollwert oder einer Sollwertfolge gehalten wird.

4. Verfahren nach einem der Ansprüche 1 bis 3, **dadurch gekennzeichnet, dass** bei einer zu großen Abweichung zwischen Soll- Werten und Ist- Werten eine Fehlermeldung erfolgt und/oder die Maschine abgeschaltet wird.

5. Verfahren nach einem der Ansprüche 1 bis 4, **dadurch gekennzeichnet, dass** die Korrekturdaten und/oder die Abweichungen der Ist- von den Soll- Werten mittels eines Algorithmus dazu genutzt werden, die Parameter des Vergleichsmodelldatensatzes anzupassen.

## Claims

1. A method for controlling the hot water preparation in electrical beverage preparation machines, in particular coffee machines, comprising a water tank (1) or water inlet for fresh water, preferably a pump (5) for delivering the fresh water to a continuous flow heater (2) without thermoblock, a brewing chamber (3) with an outlet for delivering the water heated by the continuous flow heater (2) or of the beverage produced thereby, at least one first temperature sensor (7) at the continuous flow heater (2), preferably a second temperature sensor (8) for detecting the fresh water temperature for instance at the water tank (1), preferably a flow sensor (9) for detecting the flow through the system, and an electronic controlling and regulating device (6) for controlling for instance the pump (5) and the heating body (2), **characterized by** that the electronic controlling and regulating device (6) comprises an electronic memory (63), in which is stored a data set as a comparison model data set that is prepared analytically or experimentally and comprises the data necessary or desired for the hot water preparation, that further the desired values (52) directly measurable during operation of the beverage preparation machine, such as water temperature, heating temperature, and flow, and indirectly determinable values such as pressure in the water conducting system and degree of calcification of the continuous flow heater (2) are electronically detected and compared to the data (63) of the comparison model data set, from the totality of the data the heating power and if applicable also the pump power being determined by the electronic control (6) or the contained software by using the model (63), such that optimum values with respect to a certain criterion, for instance temperature, pressure profile, avoidance of overpressure, are obtained, and preferably corrective desired values being derived therefrom, to which the pump power and the heating power are regulated.

2. The method according to claim 1, **characterized by** that during the hot water preparation process, the measurements expected according to the comparison model data set are continuously compared to the actually measured measurements, and the desired value sequences for controlling the heating power and the pump power are correspondingly corrected.

3. The method according to one of claims 1 or 2, **characterized by** that the flow in an internal control circuit, consisting of flow sensor (9) and pump (5), is held nearly constant or is held on a desired value or a desired value sequence.

4. The method according to one of claims 1 to 3, **characterized by** that in case of a too large deviation between desired values and actual values, an error message will be created and/or the machine is turned off.

5. The method according to one of claims 1 to 4, **characterized by** that the corrective data and/or the deviations of the actual from the desired values are used to adapt the parameters of the comparison model data set by means of an algorithm.

## Revendications

1. Procédé de régulation de la production d'eau chaude dans des machines électriques de préparation de boissons, en particulier machines à café, comprenant un réservoir d'eau (1) ou une amenée d'eau pour l'eau fraîche, de préférence une pompe (5) pour convoyer l'eau fraîche à un chauffe-eau instantané (2) sans thermo-bloc, une chambre d'infusion (3) avec une sortie pour convoyer l'eau chauffée par le chauffe-eau instantané (2) ou le boisson produit par ce procédé, au moins une première sonde thermique (7) au chauffe-eau instantané (2), de préférence une deuxième sonde thermique (8) pour déterminer la température de l'eau fraîche par exemple au réservoir d'eau (1), de préférence un capteur de débit (9) pour déterminer le débit à travers le système, et une dispositif de commande et régulation électronique (6) pour commander par exemple la pompe (5) et le corps de chauffage (2), **caractérisé en ce que** le dispositif de commande et régulation électronique (6) comprend une mémoire électronique (63), dans laquelle est mémorisé un ensemble de données comme ensemble de données d'un modèle de comparaison qui est préparé analytiquement ou expérimentalement et comprend les données nécessaires ou désirées pour la production d'eau chaude, qu'en outre les valeurs de consigne (52) directement mesurables pendant le fonctionnement de la machine de préparation de boissons, comme p.ex. température de l'eau, température de chauffage et débit, et des valeurs pouvant être déterminées indirectement comme p.ex. pression dans système à circulation d'eau et degré d'entartrage du chauffe-eau instantané (2) sont déterminées électroniquement et comparées aux données (63) de l'ensemble de données d'un modèle de comparaison, à partir de la totalité des données, la puissance de chauffage et le cas échéant aussi la puissance de pompage étant déterminées par la commande électronique (6) ou le logiciel contenu en utilisant le modèle (63), de façon que des valeurs optimales par rapport à un certain critère, par exemple température, allure de pression, prévention de surpression, soient obtenues, et de préférence des valeurs de consigne de correction étant dérivées de celles-ci, auxquelles la puissance de pompage et la puissance de chauffage sont régulées.

2. Procédé selon la revendication 1, **caractérisé en ce que** pendant le procès de production d'eau chaude, les mesures attendues selon l'ensemble de données d'un modèle de comparaison sont comparées en continu aux mesures réellement mesurées, et les séquences de valeurs de consigne pour commander la puissance de chauffage et la puissance de pompage sont corrigées correspondamment.

3. Procédé selon une des revendications 1 ou 2, **caractérisé en ce que** le débit dans un circuit de commande interne, consistant en le capteur de débit (9) et la pompe (5), est maintenu presque constant ou est maintenu à une valeur de consigne ou une séquence de valeurs de consigne.

4. Procédé selon une des revendications 1 à 3, **caractérisé en ce que** dans le cas d'une déviation trop grande entre les valeurs de consigne et les valeurs réelles, un message d'erreur est généré et/ou la machine est désengagée.

5. Procédé selon une des revendications 1 à 4, **caractérisé en ce que** les données de correction et/ou les déviations des valeurs réelles des valeurs de consigne sont utilisées pour adapter au moyen d'un algorithme les paramètres de l'ensemble de données d'un modèle de comparaison.
